# EUROPEAN PATENT APPLICATION

(11) **EP 1 142 754 A1**
(43) Date of publication of application: **10.10.2001**
(21) Application number: 01830238.0
(22) Date of filing: 05.04.2001
(51) Int. Cl.: B60P 1/44, B60P 3/04

(54) **Loading and unloading platform to be applied to the body of industrial transportvehicles**

(30) Priority: 05.04.2000 IT BS000035
(71) Applicant: Carrozzeria Pezzaioli S.r.l., Montichiari, Brescia (IT)
(72) Inventor: Pezzaioli, Giorgio, Montichiari (Brescia) (IT)
(74) Representative: Manzoni, Alessandro

(57) **Abstract**

This invention concerns a loading and unloading platform to be applied to the body of a transport vehicle, particularly for the transportation of live animals. It consists of a platform floor (14) placed between and guided by two vertical sliding groups (13), fixed to the body but physically independent of one another, there being no crossbars connecting them. The platform floor (14) is free of all rigid fastening to said vertical sliding groups (13), being coupled to them only by means of hinge pins (21, 21', 22) and it can be lowered from a rest position to a horizontal or inclined working position by means of hydraulic devices.

## Description

This invention concerns industrial transport vehicles in general, such as lorries, trailers and half-trailers, equipped particularly, but not exclusively, for the transport of live animals, and refers mainly to a platform for loading and unloading, which can be up-turned and is applied to the body of said vehicles.

There already exist transport vehicles, for live animals too, which have a body with one or more internal decks and which are equipped in the rear with a platform for loading and unloading. Usually, this platform is lowered from a vertical rest position against the rear of the respective body to a horizontal working position or a sloping one, to function as a ramp.

When it is in its working position, the platform can be moved in height, like a lift, for the loading and unloading of animals or other on the vehicle. The platform's vertical movement has been driven by various systems and, generally, the platform is guided along the uprights of a portal structure which necessarily requires a crossbar between the top of said uprights for its stability.

However, it is the aim of this invention to propose and supply a loading and unloading platform for transport vehicles which is innovative in some of its constructive, structural and operational aspects, in such a way as to improve its mounting in position and its performance when in use.

Said aim and the advantages deriving thereby are achieved, in accordance with the invention, by using a loading and unloading platform according to claim 1.

In particular, the floor of the platform, which may be of the type already used in ramps for industrial vehicles and commanded by hydraulic cylinders for opening and closing, is situated and guided up and down between two vertical sliding groups, which are physically separate from one another and are not even connected structurally to the platform. Thus, in order to guide the platform, it is no longer necessary to use the usual portal structure and, at the same time, all connecting and limiting components between the two sliding groups are eliminated, thereby simplifying the whole process, but without compromising its reliability.

Each sliding group consists of two special and complementary channels, one of which is movable with respect to the other and equipped with a lining of anti-friction plastic to facilitate the sliding.

The platform consists of aluminium channels placed side by side and is, in itself, self-supporting, since no further supporting elements are required. Although the platform is movable and physically independent of the sliding groups, to which it is connected only by means of hinge pins, it automatically maintains its horizontal position and balance, even when loaded.

The vertical movement of the platform is commanded by a pair of cylinders located in each sliding group, the cylinders in each pair, which give a single-purchase push, are opposite one another and have the same shaft diameter in order to keep the same speed and pressure on both sides of the platform, thereby ensuring it keeps its horizontal position.

The platform is also connected laterally to tipping cylinders for inclining the platform as a sort of ramp and to close the same in a vertical position against the rear of the vehicle body.

The platform in question will be described in greater detail here below, with reference to the enclosed drawings, which are indicative but not binding, and in which:

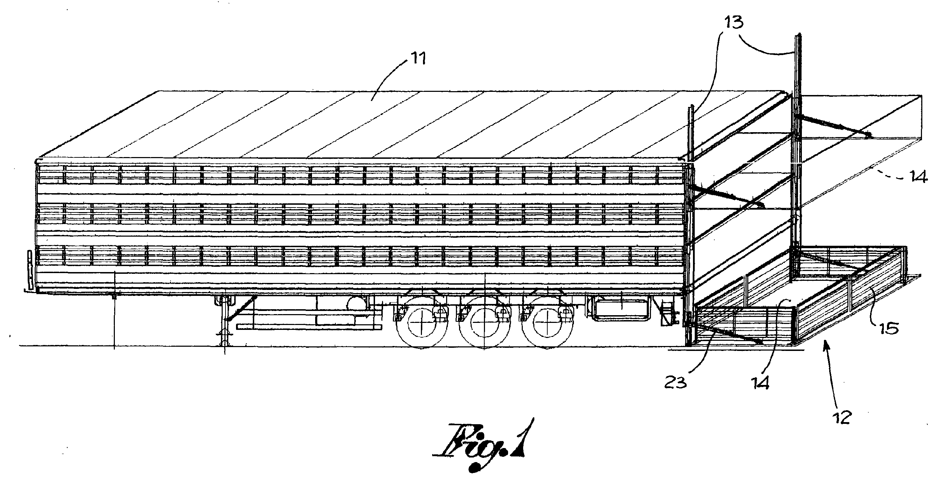

Fig. 1 shows a drawing of a half-trailer, complete with loading and unloading platform ready for use;
Fig. 2 shows a view from the back of the platform when lowered, with the relative means of guiding and command;
Fig. 3 shows a side view of the platform in horizontal position according to a vertical cross-section at the level of a sliding group;
Fig. 4 shows a similar view to that in Fig. 3 but with the platform sloping to form a ramp;
Fig. 5 shows a view of just the floor of the platform;
Fig. 6 shows an axonometric view of the layout of the devices for lifting and tipping on one side of the platform;
Fig. 7 shows a cross-section of a sliding group for the platform;
Fig. 8 shows an exploded view of the platform floor and a relative sliding group in another version of the invention.

The drawings indicate a body 11 of a half-trailer for the transport of live animals on one or more internal decks. The loading and unloading platform 12 is located at the rear of the body 11, in accordance with the invention. It consists of two vertical sliding groups 13 and a platform floor 14 placed between said sliding groups and usually equipped with a railing 15 on three sides.

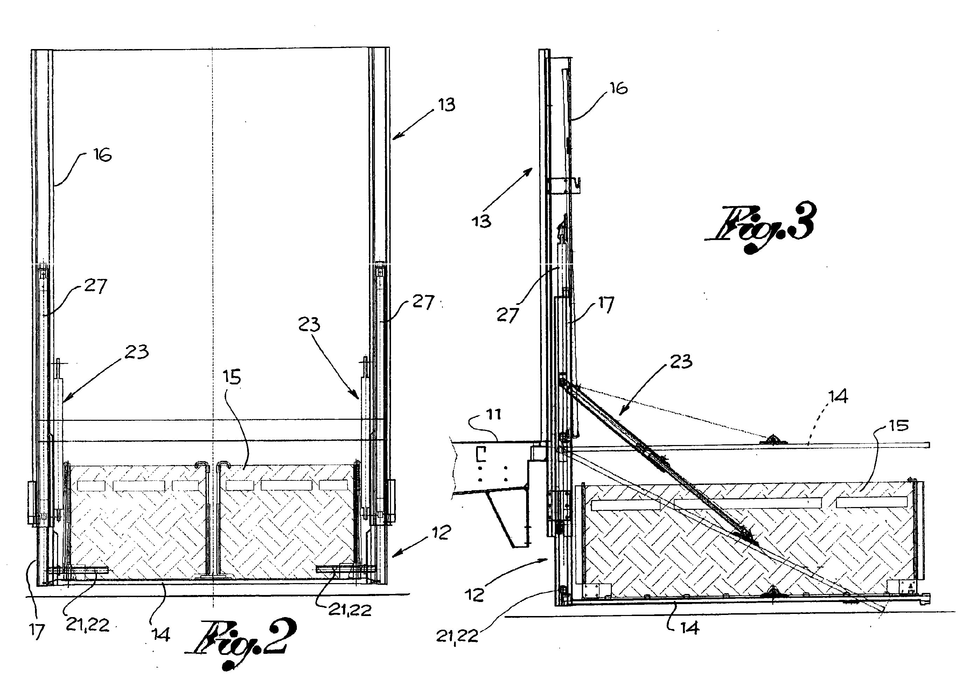

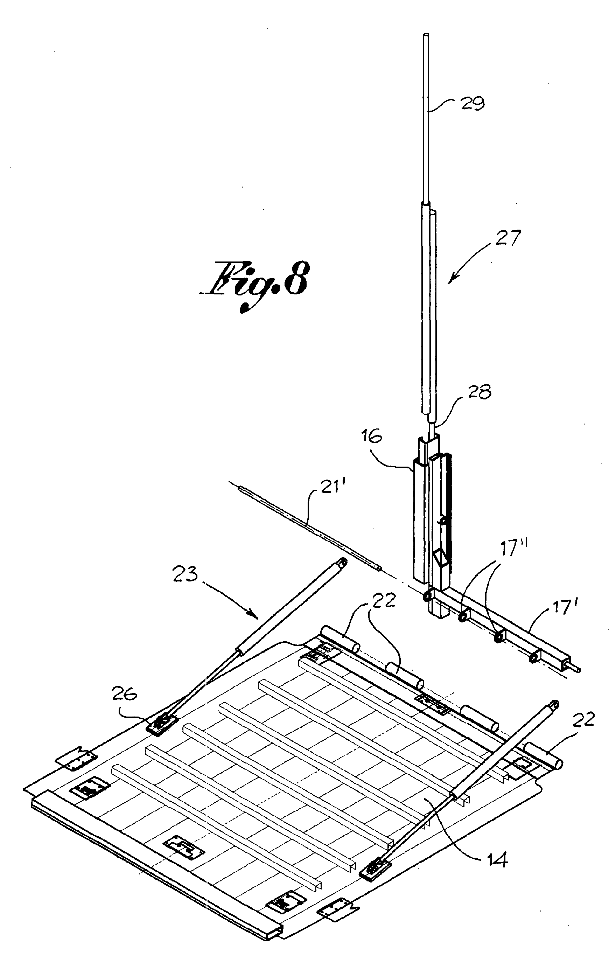

The sliding groups 13 are independent, that is, without means of connection between them - Fig. 2. Each of them consists of a fixed guiding channel 16, with C-shaped cross-section, and a movable channel 17, with a reverse C cross-section. The fixed channel 16 has a longitudinal opening 18 along the side facing the vehicle axis and a base 19 for fastening it to the body 11. The movable channel 17 is inserted inside and runs vertically within the fixed guiding channel 16. The channels 16, 17 may be made in aluminium or steel and, ideally, the movable channel 17 has a lining 20 in anti-friction plastic on two opposing sides. Between the lining 20 in plastic material and the channel 17 there may be a C-shaped element in steel 20', as a further means of preventing wear and improving the sliding of the movable channel - Fig. 7.

The movable channel 17 in each sliding group 13 is also equipped, at its lower end, with a horizontal pin 21, which extends through the longitudinal opening 18 in the fixed channel 16 and faces towards the vehicle axis, co-axially opposite the pin of the movable channel in the facing sliding group.

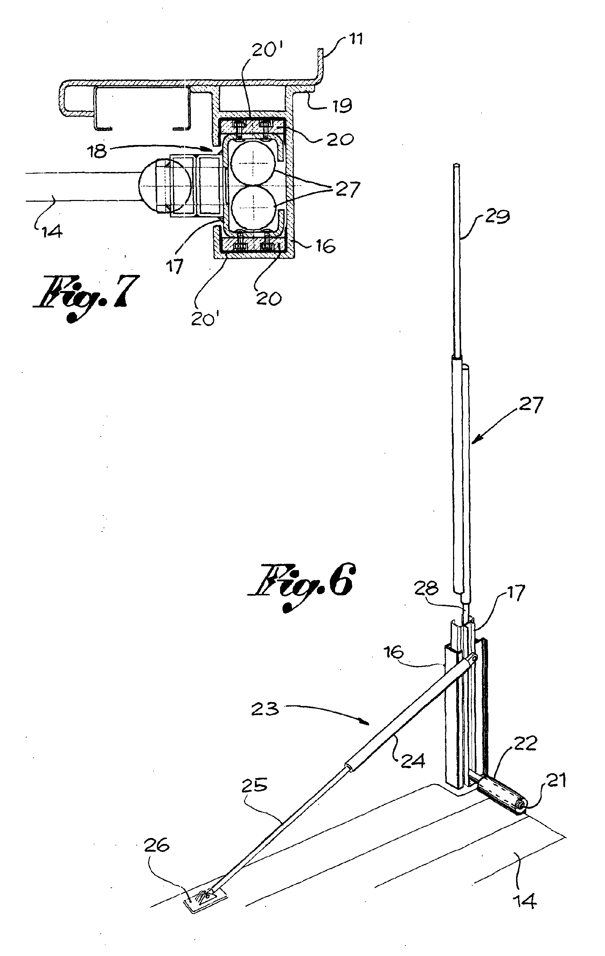

The platform floor 14 consists of aluminium sections 14' paired side by side - Fig. 5. Along the side that joins with the sliding groups 13, it has a couple of sleeves 22 each of which intended to house a pin 21. It should be noted that the pins 21 have a length sufficient to keep the platform floor horizontal without however extending between the movable channels.

In another version of the invention - Fig. 8, the platform floor is furnished with four sleeves 22. In this case, the movable channel 17 of each sliding group is equipped, at its bottom end, with a horizontal arm 17' along which a series of aligned loops 17" are fastened. When the floor is brought up to the sliding groups, a pin 21' can be passed through the sleeves 22 and the loops 17", thereby connecting the floor to the movable channels 17.

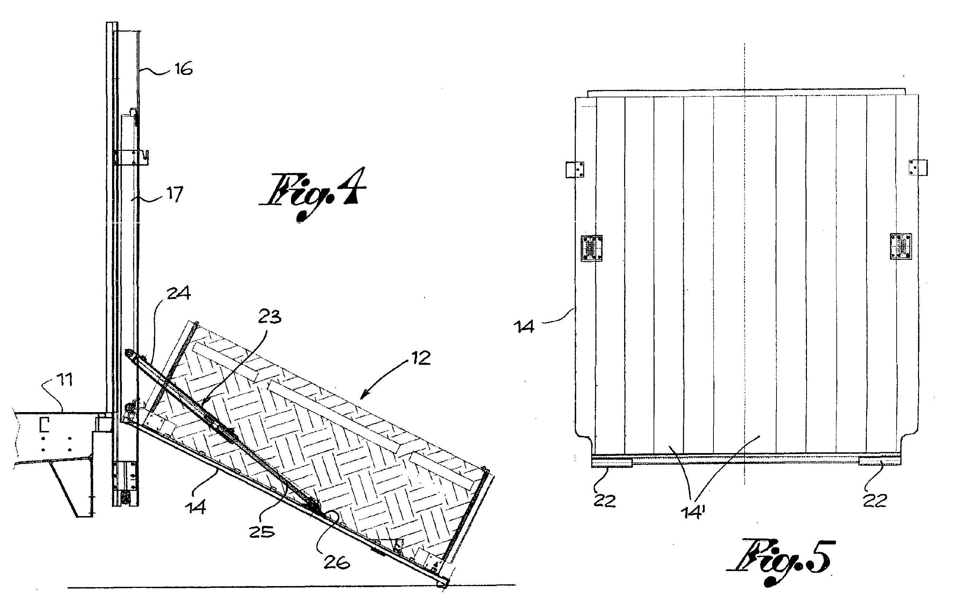

In this way, the platform floor 14 can follow the vertical movement of said channels along the guiding channels 16 and is capable of rotating on the pins 21 or 21' between the vertical rest position, where it is drawn up to the rear of the body, and a working horizontal position (Fig. 3) or sloping position (Fig. 4). In order to rotate from the rest position to the working position, the platform floor 14 is connected laterally to two hydraulic tipping devices 23, each with a cylinder 24 attached to a collateral movable channel 17 and with a shank 25 attached to the platform floor by means of a bracket 26.

The vertical movement up and down of the movable channels 17 and, with them, of the platform floor 14 with respect to the fixed channels, is carried out by means of a pair of single-purchase hydraulic cylinders 27, located in each movable channel 17, one opposite the other.

As shown in Figs 6 and 7, the cylinders of each pair are joined together to form a single body and one of these has a lower shank 28 extending downwards and anchored, by means of a steel plate, to the guiding channel 16, while the other has an upper shank 29 extending upwards and attached to the movable channel 17. The driver cylinders 27 are fed via a hydraulic circuit and, given their combination, they do not require any stabilising valves, just the usual safety valves against the risk of falling.

Finally, the two sliding groups do not require any horizontal elements to connect them; the platform floor is supported by the movable channels, which slide vertically, and without any rigid fastening, because it just rests on these channels by means of the hinge pins; the single-purchase cylinder pairs, which are similar and opposite one another, ensure the movement of the platform floor, keeping it level whatever the height; and the tipping cylinders allow the platform floor to be set horizontally or sloping, for use as a ramp, or to be totally closed in the rest position.

## Claims

1. Loading and unloading platform to be applied to the body of a transport vehicle, especially for the transportation of live animals, where the platform consists of a platform floor (14) located between and guided by two vertical sliding groups (13), which can be lowered from a vertical rest position to a working horizontal position or sloping, as a ramp, and adjustable to various heights along the sliding groups, **characterised by** the fact that: said vertical sliding groups (13) are fixed to the body, physically independent of one another, there being no crossbars to connect them; said platform floor (14) is free of any rigid fastening to said vertical sliding groups (13) being coupled to them only by means of hinge pins (21, 21', 22); said platform floor can be lowered from the rest position to the working horizontal or sloping position by lateral hydraulic tipping devices (23) and it can be moved in height by means of pairs of single-purchase hydraulic cylinders (27), opposite one another and contained inside each sliding group (13).

2. Loading and unloading platform according to claim 1, in which each sliding group (13) consists of a fixed guiding channel (16) to be fastened to the body and a movable channel (17) inserted inside and running vertically along the fixed channel, with the interposition of anti-friction elements (20).

3. Loading and unloading platform according to claim 2, in which the fixed guiding channel (16) is made in aluminium and the movable channel (17) is made in steel and furnished with a lining in anti-friction material (20).

4. Loading and unloading platform according to the previous claims, in which the movable channel (17) of each sliding group (13) has a horizontal pin (21) facing towards the pin of tile movable channel opposite, and in which the platform floor (14) is equipped with sleeves (22) designed to house said pins (21), forming a hinge for the suspension and rotation of the platform floor on the movable channels (17).

5. Loading and unloading platform according to claim 1, 2 or 3, in which each movable channel (17) of each sliding group (13) has a horizontal arm (17') facing towards the arm of the mobile channel opposite and has a series of aligned loops (17"), and in which the platform floor (14) is furnished with sleeves (22) along the side for coupling with the sliding groups (13), the sleeves and the loops relative to a movable channel being designed to receive a corresponding hinge pin (21') for the suspension and the rotation of the platform floor on the movable channels (17).

6. Loading and unloading platform according to the previous claims, in which the platform floor (14) consists of aluminium sections coupled side by side.

7. Loading and unloading platform according to claims 1 and 2, in which each pair of hydraulic cylinders (27) is united to form a single body, where a first cylinder has a lower shank (28) extending downwards and with one end anchored to the fixed guiding channel (16), and a second cylinder has an upper shank (29) which extends upwards and is attached to the movable channel (17) for the vertical movement of the same, together with the platform floor.
